# EUROPEAN PATENT APPLICATION

(11) **EP 4 171 129 A1**
(43) Date of publication of application: **26.04.2023**
(21) Application number: 21306461.1
(22) Date of filing: 19.10.2021
(51) Int. Cl.: H04W 48/08, H04W 48/16

(54) **MANAGING NETWORK RESELECTION IN NATIONAL ROAMING CONTEXT**

(71) Applicant: THALES DIS AIS Deutschland GmbH, 81541 München (DE); Thales Dis France SAS, 92190 Meudon (FR)
(72) Inventor: BREUER, Volker, 16727 BOETZOW (DE); PHAN, Ly Thanh, 92350 LE PLESSIS ROBINSON (FR)
(74) Representative: Thomas, Christine Marie Catherine

(57) **Abstract**

The present invention relates to a method of manage and support network reselection in national roaming context occurring in case of disaster conditions in a given area. A visited network receives, at least from one another affected PLMN, an information relative to the given area concerned by the disaster conditions for the affected PLMN and broadcasts, using base stations of the visited PLMN in the given area, an information to make user equipments of the affected PLMN aware of its Home PLMN being in disaster conditions and aware of a list of possible PLMN for national roaming. Further, the visited network evaluates the availability of other affected PLMN in the given area of the disaster conditions and, when availability is recognized in at least one part of the given area, broadcast information about availabilities of the other previously affected PLMN of which the availability is recognized using base stations of the visited PLMN which are present on at least this part of the given area.

## Description

### FIELD OF THE INVENTION

The present invention relates to a method to manage reselection of Public Land Mobile Network, PLMN in the following, by a user equipment, in a national roaming context occurring in case of catastrophic/disaster conditions wherein, while the user equipment is aware of its Home PLMN being in disaster conditions and has a list of possible PLMN for national roaming.

The invention also relates to a method to support, by a visited PLMN, reselection of PLMN by user equipments in a national roaming context occurring in case of disaster conditions in a given area.

The invention also pertains to devices using said methods.

### BACKGROUND OF THE INVENTION

In 3GPP, especially in the 3GPP group CT1, responsible for - User Equipment - Core Network protocols (short CT1), national roaming in case of catastrophes was already treated. It was agreed that national roaming would be allowed in said case and even supported. It means that the roaming network would indicate in case of disaster conditions for which Public Land Mobile Networks, PLMN in the following, it would perform national roaming and hence the devices can register to said network accordingly. However, other functionalities which should be modified in such a scenario were not treated which is the purpose of this invention report. It has to be noted that in normal conditions, most countries local regulations would forbid national roaming.

In a disaster conditions when whole networks are down due to various causes, such as flooding in 2021 in Germany also other aspects become important. Specifically, in such a scenario simple re-charging of the device may not be possible as besides telecommunication network also electricity may be down.

A user equipment, UE in the following, in classical foreign country roaming searches regularly for its home PLMN or Equivalent home PLMN, HPLMN or EHPLMN, and typical HPLMN search periodicity is every 6 minutes. To avoid battery draining most devices have additional implementation where information from the roaming network is used to evaluate whether HPLMN or EHPLMN search makes sense. Especially MCC (mobile country code) is a parameter often used. For example AT&T requests to activate Test Home PLMN, (THPLMN) search even when the MCC indicates Mexico or Canada and not already the MCC of the home country. In case of national roaming because of disaster conditions the MCC would be the same as the MCC of the HPLMN, hence HPLMN search would be active. Due to MCC indicated by the roaming network, a UE would continuously search for its HPLMN/EHPLMN and hence drain the battery quickly which would be a disadvantage in disaster situation as also for handsets re-charging may be an issue.

The simple mechanism just to indicate roaming users from which network are severed a list of other national roaming networks is thus only a first step. For efficient national roaming in disaster conditions, the current solution also with respect to HPLMN search needs to be refined. Specifically power saving in such roaming scenario becomes an important issue. Agreed by CT1 is only the acceptance indication per PLMN broadcasted by the roaming network.

Further alternative and advantageous solutions are accordingly desirable in the art.

### SUMMARY OF THE INVENTION

The present invention aims at providing an efficient and reliable national roaming in case of disaster conditions.

The present invention is defined, in its broadest sense, as a method to manage reselection of Public Land Mobile Network, PLMN in the following, by a user equipment, in a national roaming context occurring in case of disaster conditions wherein, while the user equipment is aware of its Home PLMN being in disaster conditions and has a list of possible PLMN for national roaming, the method comprises the steps of, for the user equipment, once the user equipment is switched to a visited PLMN belonging to the list of possible PLMN for national roaming:
- reducing the Home PLMN search periodicity to a predetermined disaster conditions periodicity,
- performing Home PLMN search according to this predetermined disaster conditions periodicity.

The invention enables to reduce the periodic searches for its home network performed by the device draining the battery in disaster situations. Otherwise, traditional roaming scheme would lead to remarkable shorter standby and active times. However, given that recharging and also the battery life time of the product are a major issue in disaster situations, the power saving proposed by the invention by suspending regular home PLMN search is critically advantageous.

According to an advantageous feature, the user equipment returns to a normal HPLMN search periodicity in case of reception, from the visited PLMN, of an information related to the availability of the Home PLMN indicating that the Home PLMN may be available again.

The suspension during large periods respective to the predetermined disaster conditions periodicity and its dependency on a dedicated indication allows significant power saving. The suspension is related to an indication in the roaming network, i.e. whether a search for a certain PLMN may make sense i.e. search with high probability of success or not.

The broadcast of such an information by the roaming network is original to the invention. Power saving and battery drain by HPLMN search needs to be avoided unless indicated to be reasonable, i.e. with high probability of success, by the national roaming network with information received from the HPLMN.

This document uses the expression "visited PLMN" or VPLMN indifferently to designate a PLMN receiving user equipment from another PLMN when the latter PLMN is in disaster situations. These visited PLMN are also known as "disaster roaming network". The document describes the case where the Visited PLMN is in the same country as the HPLMN of the user equipment. However, it is to be understood, more generally, that disaster roaming could also occur in case the user equipment is in another country than its HPLMN country, and the HPLMN may not have roaming agreement with that disaster roaming network in that other country. In such case, the user equipment which would not roam in normal conditions on that PLMN (where the HPLMN may not have roaming agreement with), would be allowed to roam on that PLMN in disaster conditions. In such disaster case in a foreign country, it is to be understood that the PLMNs (which have roaming agreement with the HPLMN) are in disaster conditions and cannot be used by the user equipment. Thus, what is described as HPLMN in this document can be replaced by "PLMNs which have roaming agreement with the HPLMN". In case of disaster the UE is thus allowed to roam from an earlier used network, whether hPLMN or allowed roaming network to another PLMN, called visited PLMN, whether there is or not a roaming agreement or not.

According to the invention, in national roaming whether HPLMN search shall be done according to normal rules is indicated/steered by the VPLMN. It means that the VPLMN is broadcasting respective control information. Normal HPLMN search would not be performed unless indicated otherwise.

Advantageously, the information related to the availability of the Home PLMN is send via BCH (Broadcast Channel) of the visited-PLMN.

According to a particular feature, the predetermined disaster conditions search periodicity is a value stored by the UE on the USIM card and hence was predetermined by its HPLMN.

According to another particular feature, the predetermined disaster conditions search periodicity is a standard defined range or value and set to a multiple of hours or once per day.

According to a feature of the invention, the list of possible PLMN for national roaming comprising a preference order, the method further comprises, for the user equipment, the step of performing a higher preference PLMN search in case of reception, from the visited PLMN, of an information that such a higher preference PLMN is available.

The invention thus enables the suspension of HPLMN or higher priority PLMN search in case of national roaming due to disaster conditions.

The invention also relates to a method to support, by a visited PLMN, reselection of PLMN by user equipments in a national roaming context occurring in case of disaster conditions in a given area, said method comprising the steps of:
- receiving, at least from one another affected PLMN, an information relative to the given area concerned by the disaster conditions for the affected PLMN,
- broadcasting, using base stations of the visited PLMN in the given area, an information to make user equipments of the affected PLMN aware of its Home PLMN being in disaster conditions and aware of a list of possible PLMN for national roaming, the method further comprising the steps of, for the visited PLMN:
- evaluating the availability of other affected PLMN in the given area of the disaster conditions,
- when availability is recognized in at least one part of the given area, broadcast information about availabilities of the other previously affected PLMN of which the availability is recognized using base stations of the visited PLMN which are present on at least this part of the given area.

According to the invention, the broadcasted indication is done separately per PLMN and only in the affected area. With the invention, the roaming network receives from the HPLMN disaster information and indication in which areas an HPLMN search does not make sense, i.e. with low probability of success, because of the disaster.

An area can be a tracking area in the sense of 3GPP but also a geographic area covered by at least of one base station. The related information exchange is performed between the networks themselves. Said information is thus received by the VPLMN from the respective PLMNs that are in disaster situations.

The underlying roaming architecture for national roaming is similar to the architecture used for roaming in 5G so far, and 3GPP TS 23.501 roaming architectures can be used as suitable reference. However, the indication of information being provided by the previous HPLMN to be broadcasted by the VPLMN for national roaming and also being maintained by said network is a new aspect. Especially the indication/information is provided for an entire group instead of dedicated signaling when individual UE does roaming. Also said information is also maintained by the corresponding PLMN, meaning that it provides updates for said information to the VPLMN.

The information exchange is done via the core network elements of the effected PLMN and the network intended for national roaming, means the new VPLMN. Based on said information received by the core network, the visited PLMN can indicate disaster information or activate the required SIB information accordingly. It means finally that the AMF of the visited PLMN indicates to the respective base stations in said disaster area to indicate the SIB information for making the UEs of the PLMN which is in disaster in said area aware that roaming of them would be accepted. By providing said information by the HPLMN, while the VPLMN just activates and transmits them via broadcast, the HPLMN stays in control of its status that is indicated in the other PLMN.

Instead of one indication for which UEs national roaming to a network is allowed, a roaming network working according to the invention receives this additional indication per network and uses it for an efficient and focused broadcast in areas of disaster situations and areas nearby these areas.

With the invention, the roaming network can also indicate for which networks HPLMN is sensible to perform and correspondingly for which networks HPLMN, or higher priority PLMN, search is suspended.

Hence, the roaming network indicates for each PLMN where it accepts national roaming users because of disaster, whether H-PLMN search makes sense or not. This indication allows for regional indication/termination as also activating the HPLMN search process after disaster conditions are overcome whilst being power saving during disaster situation as HPLMN and higher priority PLMN search is suspended.

The HPLMN indicates to the roaming network whether to activate HPLMN search. The indication is separated for each PLMN. Thus according to the invention, a still working network node of an PLMN indicates that HPLMN search/don't search, for a specific PLMN, shall be done or not. Such a network node provides thus said information to a roaming network.

Therefore, any entity in the roaming network that uses said information and modifies the broadcast, i.e. the PLMN search indication, accordingly, is part of the invention.
The need/wish to control in general HPLMN search by the HPLMN is also believed to exist in disaster conditions. Hence the maximum search periodicity for the HPLMN search in disaster situation could be a standard agreed fixed value, i.e. multiple of hours or once per day, which would result in enormous power saving compared to normal HPLMN search periodicity, but would ensure return of the UEs roaming in disaster conditions. This would ensure a return of the roaming users to its HPLMN even when the Visited PLMN would have a malfunction or erroneously not indicated that HPLMN return is possible again.
Such a predetermined value for disaster conditions periodicity for HPLMN search could also be stored on the USIM card of the UE and hence would have been predetermined and pre-configured by its HPLMN.

The methods of the invention as implemented by the UE and by the roaming network allow drastic power saving by the usage to deactivate HPLMN search in geographical areas where HPLMN is not reachable due to disaster situation. This is the case unless disaster conditions are cleared and HPLMN search shall be conducted again. The invention enables the indication to be done base station wise and area wise. The UE, on its side, saves power in disaster conditions and avoids unnecessary HPLMN or higher priority PLMN search activities draining the battery. In certain disaster conditions specific telecom networks may be down for weeks, same as electricity and hence having functional device running at low power consumption mode is evident as re-charging may not be possible for days. Also devices like meters can drain all the battery without any purpose.

In addition coverage area from various networks may be different in the regions of the disaster conditions, so different networks may provide coverage partially overlapping in these areas. Where available the roaming users should be distributed across all networks especially where HPLMN is available to have load balancing. And also users may move hence there is a need to be a certain flexibility and new logic.

According to an implementation, the broadcast is performed separately in the BCH of the visited PLMN for each of the PLMN for which national roaming users are accepted by the visitor PLMN.

This is a simple and efficient implementation to broadcast the indication of the invention to whom it may be useful for. Configuration parameters can be further provided while broadcasting the HPLMN or higher priority visitor PLMN recovery. The BCH indicates roamers which are welcomed from which PLMN and also for these PLMNs whether HPLMN search should be performed or not. BCH SIB information is described in TS36.331 in further details.

According to a preferred embodiment, the list of possible PLMN for national roaming comprising a preference order, the method further comprises, for the visited PLMN, when availability of a preferred PLMN is detected, broadcast an information about availabilities of such a higher preference PLMN which the availability is detected.

So a UE with a certain national roaming ranking may choose to search for a higher ranked PLMN also if it is not its home PLMN but only when indicated. A corresponding national roaming preference list is provided to the UE when it is in a disaster area and while it is informed about the disaster and about the national roaming possibility.

Advantageously the evaluation of the availability of other PLMN in the area of the disaster conditions comprises the reception, from other PLMN, of an information of their recovery.

This enables the visitor PLMN to be aware of the recovery of any HPLMN in the disaster area. The direct communication between the networks is particularly efficient and economic. It avoids the visited PLMN to request the HPLMN for such an information. Furthermore updating said roaming information by the indications of the network in disaster conditions allows said HPLMN network to stay in control whether national roaming needs to be indicated or not. It means that the visited PLMN just indicates information provided by the HPLMN of said UEs which are in roaming.

The present invention also relates to a user equipment having reception/transmission sub-module and reselection monitoring sub-module configured to manage reselection of Public Land Mobile Network in a national roaming context occurring in case of disaster conditions, said reselection monitoring sub-module being aware that its Home PLMN is in disaster conditions and having a list of possible PLMN for national roaming, the reselection monitoring sub-module being further configured to, once the user equipment is switched to a visited PLMN belonging to the list of possible PLMN for national roaming:
- reduce the Home PLMN search periodicity to a predetermined disaster conditions periodicity,
- performing a Home PLMN search according to this predetermined disaster conditions periodicity.

Advantageously, the user equipment returns to the normal HPLMN search periodicity in case of reception, from the visited PLMN, of an information related to the availability of the Home PLMN indicating that the Home PLMN may be available again i.e search of HPLMN have a high probability of success.

The invention also concerns a PLMN infrastructure configured to support reselection of PLMN by user equipments in a national roaming context occurring in case of disaster conditions in a given area, said PLMN infrastructure being configured to:
- receive, at least from one another affected PLMN, an information relative to the given area concerned by the disaster conditions for the affected PLMN,
- broadcast, using base stations of the visited PLMN in the given area, an information to make user equipments of the affected PLMN aware of its Home PLMN being in disaster conditions and aware of a list of possible PLMN for national roaming, the PLMN infrastructure being further configured to:
   - evaluate the availability of other PLMN in the area of the disaster conditions,
   - when availability is detected, broadcast information about availabilities of the other PLMN of which the availability is detected.

Such an infrastructure comprises a core network to receive directly the information from the other networks, base stations and any intermediary servers and communication interfaces to implement the method to support network reselection according to the invention.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 shows a flowchart of a particular form of an embodiment;
- Figure 2 illustrates first disaster conditions where the invention is implemented;
- Figure 3 illustrates second disaster conditions where the invention is implemented.

### DETAILED DESCRIPTION OF EMBODIMENTS OF THE INVENTION

For a more complete understanding of the invention, the invention will now be described in detail with reference to the accompanying drawing. The detailed description will illustrate and describe what is considered as a preferred embodiment of the invention. It should of course be understood that various modifications and changes in form or detail could readily be made without departing from the scope of the invention. It is therefore intended that the invention may not be limited to the exact form and detail shown and described herein, nor to anything less than the whole of the invention disclosed herein and as claimed hereinafter. The same elements have been designated with the same references in the different drawings. For clarity, only those elements and steps which are useful to the understanding of the present invention have been shown in the drawings and will be described.

So far only access regulation i.e. how baring is handled in standard discussions for the visited PLMN. In case of disaster conditions, the impacted HPLMN informs the other PLMN on this situation. Said other PLMN activates/indicates for other national networks that roaming for those UEs is allowed. This indication may be different per PLMN.

Each UE has a list of preferred national roaming in disaster conditions networks and in case more than one PLMN would be available for national roaming, the UE acts accordingly, and hence selects the network with highest priority.

Current discussions concern the point of the access barring mechanism i.e. whether Universal Access Control would be enhanced or a new mechanism would be introduced. No further discussions are currently developed.

Currently in 3GPP CT1 document C1-214187, it is stated that the solution, in case of disaster conditions, should inform the UE about Disaster Condition over 3GPP access and provide minimal information broadcast over 3GPP access of a PLMN offering disaster roaming to UEs of a PLMN with Disaster Condition, sufficient to enable the UEs to determine that a Disaster Condition applies to the PLMN with Disaster Condition.

In the area where a PLMN can provide normal services to a UE, this PLMN is not considered as a PLMN with Disaster Condition in that area for that UE.

Also it was stated that a PLMN offering disaster roaming shall indicate accessibility for disaster roamers through SIB messages. The indication may contain the list of PLMN(s) with disaster condition for which disaster roaming is offered.

Furthermore, an UE of PLMN D with Disaster Condition shall determine that PLMN A offers disaster roaming when PLMN A's NG-RAN cell broadcasts PLMN ID of PLMN D in the list of PLMN(s) with Disaster Condition for which disaster roaming is offered by PLMN A. The design of the SIB messages is further defined by 3GPP RAN WG2 (RAN Workgroup 2).

CT1 has thus agreed that a network which offers disaster roaming shall indicate this accordingly, and PLMN can be stored or updated. However related behaviour as outlined in this invention was not subject of any of the discussions so far not in CT1 nor RAN2.

The invention proposes additional functions for a national roaming situation.

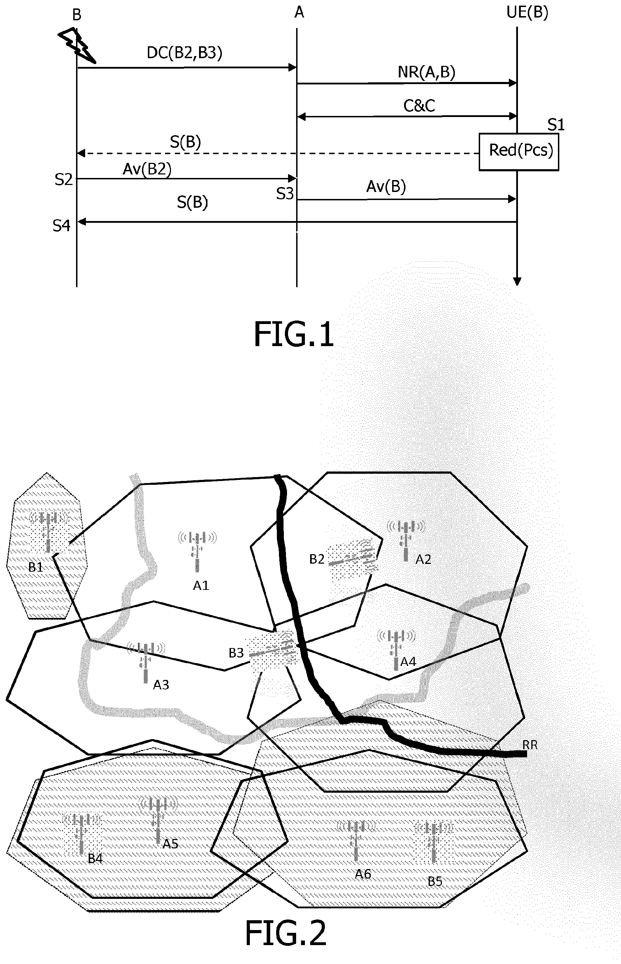

Figure 1 shows a flowchart of the method of the invention in the situation as presented on figure 2.

Figure 2 schematically shows disaster conditions where the invention is implemented. More precisely it illustrates a flood along the "red river" RR and two base stations B2 and B3 of a given network B are down. The disaster conditions are illustrated with a storm flash on figure 1.

The disaster area of network B is illustrated by a light grey line around the red river RR.

As disclosed in the current discussion, the visited core network A informs the user equipment UE that its Home PLMN is in disaster condition and it broadcasts to the user equipment UE with a list of PLMN that it would accept users from, for national roaming.

According to the invention, in a step S1 the visitor network A further receives information DC(B2,B3) about the area of the network B that is in disaster situation, i.e. the encountered disaster conditions DC at base station B2 and B3.

In a step S2, the network A then broadcasts the information about the disaster situation and about the list of possible roaming network in the concerned disaster area where the network A has 4 base stations A1, A2, A3 and A4. The network A coverage comprises at least the area of network B that is in disaster conditions.

Hence base stations A1,A2 A3 and A4 of given network A indicate national roaming NR is allowed on network A for users of the network B noted NR(A,B) in figure 1.

Also advantageously the base station A6 would indicate roaming allowed as part of A6 coverage corresponds to area in disaster conditions of network B. The base station A5 would indicate National Roaming not allowed as B4 is operating, or there just may be no indication related to disaster conditions active at all in the broadcast of A5.

An user equipment UE(B) from the network B then connect and camps C&C on network A in a step S3.

This is what would be performed according current standardisation agreements and all UEs roamed from B to A would perform regularly HPLMN search for network B. When being in the area of the base stations A1, A2, A3 and A4 this would be just a waste of power and also for an user equipment around the base station A1, there is only very little chance to find B1 as HPLMN.

According to the invention, in a step S4, the user equipment UE(B) reduces the home PLMN search frequency to a predetermined disaster conditions periodicity Pcs. It then performs, as illustrated by a dashed line, home PLMN search S(B) based on this predetermined disaster conditions periodicity.

This may generate higher roaming costs depending on roaming agreements but preserves the battery of the user equipment in disaster area.

However, when being in proximity of the base station A4, finding B5 could be quite realistic and the user equipment should thus search for its HPLMN and return to it. It is the same situation in proximity of the base station A6.

Once situation will be solved for the base stations B2 and B3, also all others base stations of network A should indicate to the user equipment to perform HPLMN search. Then, advantageously, once network A has been informed of the recovery of network B in the concerned area in a step S5 of the availability of at least one of the base station, here B2, the method comprises a step S6 of broadcasting an information Av(B) on the availability of network B in the concerned area of base station B2. Then a user equipment UE of network B UE(B) being in this area around the base station B2 performs a home PLMN search S(B) on a classical roaming periodicity in a step S7.

Then, once all base station of network B are repaired the network A may entirely switch off the roaming allowance for user equipment from network B.

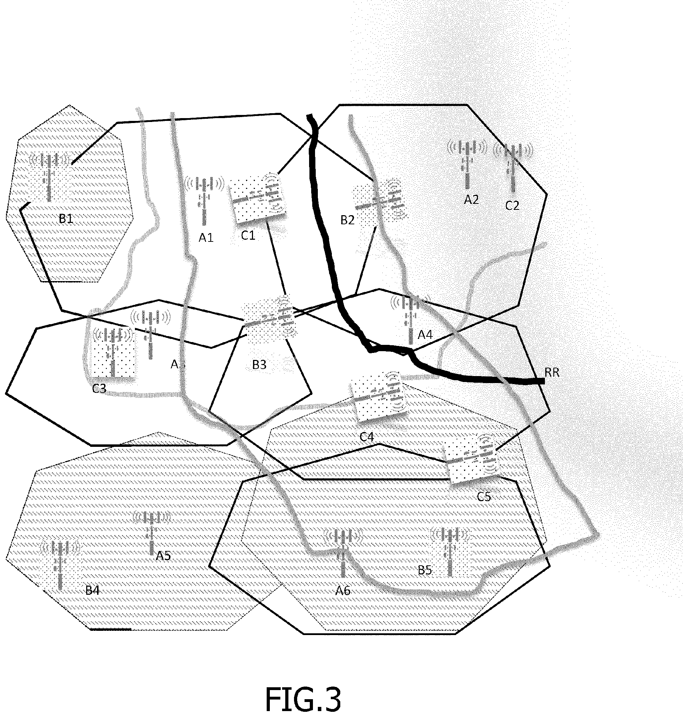

Figure 3 shows the same disaster conditions as on figure 2 with an additional network C. The area in disaster conditions of network C is different from the one of network B and is illustrated by an intermediate grey line. So base stations A1, A2, A3, A4 and A6 of network A would indicate that they accept roaming users of network C. However the UEs of network C have the national roaming preference first network B and afterwards network A.

The indication whether HPLMN or higher priority PLMN search makes sense is an additional indication besides the roaming authorization indication. Said search indication is emitted by the base station of the roaming network and may be BS individual or for all BS of an area. If indicated that a specific network is reachable or not reachable the receiving device shall suspend its HPLMN or higher ranked priority search.

Normally in national roaming more than one network is involved as depicted in Fig.3. The network C is also impacted by the disaster conditions as network B.

However users of network C have the priority order for national roaming as follows B first and then A.

As an example just referring here to figure 3, a UE of network C has roaming priority to network B and afterwards A. So if networks B and C are impacted by the disaster conditions and without the invention, the UE of network C would regularly search for its HPLMN C and the higher roaming priority PLMN B, which in certain areas both are down. Hence, network C in such an area would drain its battery even quicker.

The invention prevents such situation, which could be very harmful for meters or other internet of things apparatus of very long lifespan. But also allows for additional power saving for handsets which are normally regularly recharged and may need to operate in such disaster conditions on the available battery power as long as possible, hence avoiding unnecessary activities.

The preference usage means that the base station A6 should indicate that network A accepts users of network C, and also ones from network B. Meanwhile the base station A6 indicates that search for network B makes sense and thus broadcast information about availabilities of the network B. It besides makes no sense to search for C but it makes sense to search for B. So a C user would select the higher ranked priority national roaming network B in that case.

Whilst the base station A4 would indicate that user equipment from network C, and from network B, are accepted and meanwhile it can further broadcast that there is no need to search for network C or B, so a user equipment of the network C would entirely suspend its HPLMN search and search for higher priority ranked network B. It will prevent the UE to drain its battery.

Depending on progress and reverting disaster conditions exception for national roaming, search indication may be activated in certain areas again, so that devices start doing HPLMN or higher priority PLMN search to leave the roaming network. So in repaired areas, UE may leave the roaming network, which allows a smoother return than switching off roaming authorization which could lead to devices being out-of-service. An area in disaster conditions may not all at once return to normal operation but step by step. Especially in multi-operator scenarios as outlined in Figure 3, the indication whether HLMN or higher priority PLMN search shall be abandoned to avoid battery drain is very critical and useful. In addition larger disaster conditions may have different impact areas for the different networks and hence needs to be sorted and solved on certain granularity which is enabled with the invention.

In the above detailed description, reference is made to the accompanying drawings that show, by way of illustration, specific embodiments in which the invention may be practiced. These embodiments are described in sufficient detail to enable those skilled in the art to practice the invention. The above detailed description is, therefore, not to be taken in a limiting sense, and the scope of the present invention is defined only by the appended claims, appropriately interpreted.

## Claims

1. Method to manage reselection of Public Land Mobile Network, PLMN in the following, by a user equipment, in a national roaming context occurring in case of disaster conditions wherein, while the user equipment is aware of its Home PLMN being in disaster conditions and has a list of possible PLMN for national roaming, the method comprises the steps of, for the user equipment, once the user equipment is switched to a visited PLMN belonging to the list of possible PLMN for national roaming:
- reducing the Home PLMN search periodicity to a predetermined disaster conditions periodicity,
- performing Home PLMN search according to this predetermined disaster conditions periodicity.

2. Method according to claim 1, wherein the user equipment returns to a normal HPLMN search periodicity in case of reception, from the visited PLMN, of an information related to the availability of the Home PLMN indicating that the Home PLMN may be available again.

3. Method according to one of claims 1 to 2, wherein the information related to the availability of the Home PLMN is send via BCH of the visited-PLMN.

4. Method according to one of claims 1 to 3, where the predetermined disaster conditions search periodicity is a value stored by the UE on the USIM card and hence was predetermined by its HPLMN.

5. Method according to one of claims 1 to 4, where the predetermined disaster conditions search periodicity is a standard defined range or value and set to a multiple of hours or once per day.

6. Method according to one of claims 1 to 5, wherein, the list of possible PLMN for national roaming comprising a preference order, the method further comprises, for the user equipment, the step of performing a higher preference PLMN search in case of reception, from the visited PLMN, of an information that such a higher preference PLMN is available.

7. Method to support, by a visited PLMN, reselection of PLMN by user equipments in a national roaming context occurring in case of disaster conditions in a given area, said method comprising the steps of:
- receiving, at least from one another affected PLMN, an information relative to the given area concerned by the disaster conditions for the affected PLMN,
- broadcasting, using base stations of the visited PLMN in the given area, an information to make user equipments of the affected PLMN aware of its Home PLMN being in disaster conditions and aware of a list of possible PLMN for national roaming, the method further comprising the steps of, for the visited PLMN:
- evaluating the availability of other affected PLMN in the given area of the disaster conditions,
- when availability is recognized in at least one part of the given area, broadcast information about availabilities of the other previously affected PLMN of which the availability is recognized using base stations of the visited PLMN which are present on at least this part of the given area.

8. Method according to claim 7, wherein the broadcast is performed separately in the BCH of the visited PLMN for each of the PLMN for which national roaming users are accepted by the visitor PLMN.

9. Method according to one of claims 7 and 8, wherein the list of possible PLMN for national roaming comprising a preference order, the method further comprises, for the visited PLMN, when availability of a preferred PLMN is detected, broadcast an information about availabilities of such a higher preference PLMN which the availability is detected.

10. Method according to one of the claims 7 to 9, wherein the evaluation of the availability of other PLMN in the area of the disaster conditions comprises the reception, from other PLMN, of an information of their recovery.

11. User equipment having reception/transmission sub-module and reselection monitoring sub-module configured to manage reselection of Public Land Mobile Network in a national roaming context occurring in case of disaster conditions, said reselection monitoring sub-module being aware that its Home PLMN is in disaster conditions and having a list of possible PLMN for national roaming, the reselection monitoring sub-module being further configured to, once the user equipment is switched to a visited PLMN belonging to the list of possible PLMN for national roaming:
reduce the Home PLMN search periodicity to a predetermined disaster conditions periodicity,
performing a Home PLMN search according to this predetermined disaster conditions periodicity.

12. User equipment according to claim 11, wherein the user equipment returns to the normal HPLMN search periodicity in case of reception, from the visited PLMN, of an information related to the availability of the Home PLMN indicating that the Home PLMN may be available again.

13. PLMN infrastructure configured to support reselection of PLMN by user equipments in a national roaming context occurring in case of disaster conditions in a given area, wherein user equipment is aware of its Home PLMN being in disaster conditions and has a list of possible PLMN for national roaming, the PLMN infrastructure being further configured to:
- evaluate the availability of other PLMN in the area of the disaster conditions,
- when availability is detected, broadcast information about availabilities of the other PLMN of which the availability is detected.
